(19) Europäisches Patentamt
European Patent Office
Office européen des brevets

(11) **EP 4 679 336 A1**

(12) **EUROPEAN PATENT APPLICATION**

(43) Date of publication:
**14.01.2026 Bulletin 2026/03**

(21) Application number: **25178655.4**

(22) Date of filing: **23.05.2025**

(51) International Patent Classification (IPC):
**G06N 10/60** (2022.01)    **G06N 10/20** (2022.01)
**G06N 3/082** (2023.01)    **G06N 3/0895** (2023.01)
**G06N 3/045** (2023.01)

(52) Cooperative Patent Classification (CPC):
**G06N 10/60; G06N 3/045; G06N 3/082;**
**G06N 3/0895; G06N 10/20**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **11.07.2024 JP 2024111623**

(71) Applicant: **Fujitsu Limited**
**Kawasaki-shi, Kanagawa 211-8588 (JP)**

(72) Inventor: **TRAN, Quoc Hoan**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **TRAINING PROGRAM, TRAINING DEVICE, AND TRAINING METHOD**

(57) A computer acquires a training data set of a machine learning model. The machine learning model includes a quantum circuit in each of a plurality of layers and a generating function that generates, from an output of a first quantum circuit in a preceding layer in two consecutive layers, an input of a second quantum circuit in a subsequent layer. The computer determines a value of a parameter included in the generating function by training the machine learning model using the quantum computer that executes calculation of the quantum circuit in each of the plurality of layers and the training data set. The computer generates the trained machine learning model by setting the value of the parameter in the generating function.

FIG.6

**Description**

FIELD

The embodiment discussed herein is related to a training technique using a quantum computer.

BACKGROUND

A quantum computer can deal with more information than a classical computer by performing calculation using a quantum superposition state. The quantum computer uses a quantum circuit, which is a quantum computation model in which a quantum algorithm is described, to change a quantum state of a quantum bit, thereby achieving an increase in probability of appearance of a state corresponding to desired information. In a case where N (N is an integer of 1 or more) quantum bits are used, $2^N$ states can be represented.

A quantum algorithm that is exponentially faster than the classical computer has been discovered for specific problems such as prime factorization, quantum system simulation, and sampling.

Regarding quantum machine learning using a Noisy Intermediate-Scale Quantum (NISQ) computer, which is an example of the quantum computer, a data summarization method for training a machine learning model is known.

Supervised learning with quantum enhanced feature spaces is also known. In training of a quantum neural network, a phenomenon called a barren plateau is also known. A method for enhancing a generative model by quantum correlation is also known. A method for predicting many characteristics of a quantum system with a small number of measurements is also known.

The related technologies are described, for example, in Japanese Laid-open Patent Publication No. 2022-176899, in V. Havlicek et al., "Supervised learning with quantum enhanced feature spaces", arXiv:1804.11326v2, 2018, in J. R. McClean et al., "Barren plateaus in quantum neural network training landscapes", arXiv:1803.11173v1, 2018, in X. Gao et al., "Enhancing Generative Models via Quantum Correlations", arXiv:2101.08354v1, 2021, and in H.-Y. Huang et al., "Predicting Many Properties of a Quantum System from Very Few Measurements", arXiv:2002.08953v2, 2020.

Quantum machine learning is a technique for applying a principle of quantum computation to machine learning, and is expected to be applied to a problem that is difficult to calculate by a classical computer. However, in a case where a parameter included in a quantum circuit is adjusted by quantum machine learning, calculation time it takes to adjust the parameter may be long.

Accordingly, it is desirable to improve efficiency of machine learning using a quantum computer.

SUMMARY

According to an aspect of an embodiment, a training device includes an acquisition unit and a training unit. The acquisition unit acquires a training data set of a machine learning model including a quantum circuit in each of a plurality of layers and a generating function that generates, from an output of a first quantum circuit in a preceding layer in two consecutive layers, an input of a second quantum circuit in a subsequent layer. The training unit determines a value of a parameter included in the generating function by training the machine learning model using a quantum computer that executes calculation of the quantum circuit in each of the plurality of layers and the training data set, and generates the trained machine learning model by setting the value of the parameter in the generating function.

BRIEF DESCRIPTION OF DRAWINGS

The invention is described, by way of example only, with reference to the following drawings, in which:

FIG. 1 is a diagram illustrating a first quantum circuit;
FIG. 2 is a diagram illustrating a second quantum circuit;
FIG. 3 is a functional configuration diagram of a training device according to an embodiment;
FIG. 4 is a flowchart of first training processing;
FIG. 5 is a configuration diagram of a quantum computer system;
FIG. 6 is a diagram illustrating an inference model to be trained;
FIG. 7 is a hardware configuration diagram of a quantum computer;
FIG. 8 is a functional configuration diagram of a server;
FIG. 9 is a flowchart of second training processing;
FIG. 10 is a flowchart of inference processing;
FIG. 11 is a diagram illustrating a third quantum circuit;

FIG. 12 is a diagram illustrating a fourth quantum circuit;

FIG. 13 is a diagram illustrating a first fixed quantum circuit;

FIG. 14 is a diagram illustrating a second fixed quantum circuit;

FIG. 15 is a diagram illustrating a first simulation result;

FIG. 16 is a diagram illustrating a second simulation result; and

FIG. 17 is a hardware configuration diagram of an information processing device.

## DESCRIPTION OF EMBODIMENT

Preferred embodiments of the present invention will be explained with reference to accompanying drawings.

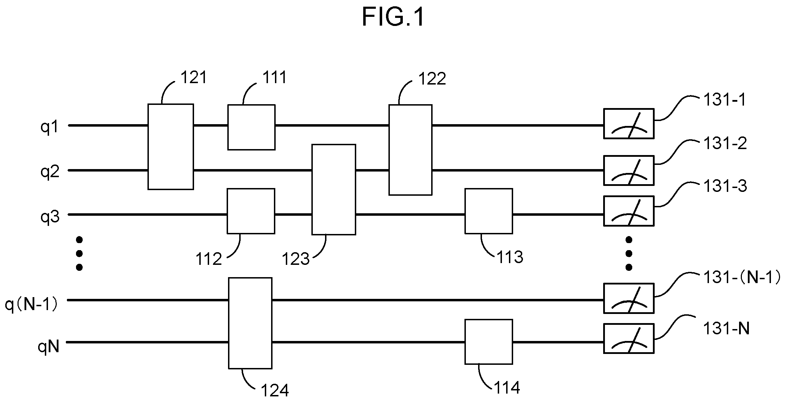

FIG. 1 illustrates an example of a first quantum circuit.

The quantum circuit in FIG. 1 represents a combination of quantum gates that execute operations on N quantum bits q1 to qN (N is an integer of 1 or more).

Quantum gates 111 to 114 are quantum gates that change the state of one quantum bit.

Quantum gates 121 to 124 are quantum gates that generate an entanglement between two quantum bits.

A measurement 131-i (i = 1 to N) represents an operation of measuring the state of a quantum bit qi to output a measurement value as classical information. The output measurement value is a logical value "0" or a logical value "1".

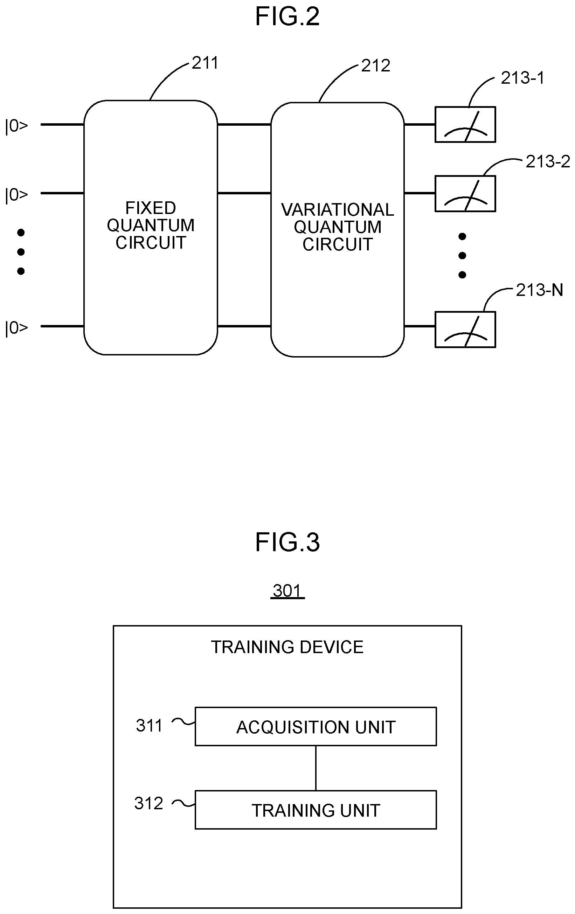

FIG. 2 illustrates an example of a second quantum circuit used for quantum machine learning.

The quantum circuit in FIG. 2 represents an operation on N quantum bits q1 to qN, and includes a fixed quantum circuit 211 and a variational quantum circuit 212. The fixed quantum circuit 211 is a quantum circuit that includes no parameter, and the variational quantum circuit 212 is a quantum circuit that includes a parameter. The procedure of quantum machine learning using the quantum circuit in FIG. 2 is as follows.

(P1) A classical computer embeds information of input data in the fixed quantum circuit 211 to generate a quantum feature map (QFM) as described in V. Havlicek et al., "Supervised learning with quantum enhanced feature spaces", arXiv:1804.11326v2, 2018 or the like.

(P2) After setting the N quantum bits to an initial state 10>, a quantum computer executes, on the N quantum bits, an operation represented by the fixed quantum circuit 211 including the QFM.

(P3) The quantum computer executes an operation represented by the variational quantum circuit 212 on the N quantum bits on which the operation represented by the fixed quantum circuit 211 has been executed.

(P4) The quantum computer executes measurements 213-1 to 213-N to output measurement values of the N quantum bits.

(P5) The classical computer uses the measurement values output from the quantum computer to adjust the parameter of the variational quantum circuit 212.

When the parameter adjusted by quantum machine learning is set in the variational quantum circuit 212, a trained quantum circuit is generated and used for inference for unknown data. For example, in a case where the inference for unknown data is image classification, the quantum computer outputs a result of the image classification as a measurement value.

A variational quantum algorithm (VQA) is known as a variational algorithm applied to quantum machine learning. The VQA is one of algorithms that use a quantum computer and a classical computer in a hybrid manner.

The VQA has attracted attention as an algorithm that uses a current noisy NISQ computer for a problem that is difficult to calculate by the classical computer. The NISQ computer is a medium-scale quantum computer that uses about several tens to several hundreds of quantum bits. The procedure of the VQA is as follows.

(P11) The classical computer inputs a variational quantum circuit that includes a parameter to the quantum computer.

(P12) The quantum computer executes an operation represented by the variational quantum circuit to execute a specific quantum computation that depends on the parameter.

(P13) The quantum computer outputs a measurement value by executing a measurement.

(P14) The classical computer evaluates the measurement value output from the quantum computer to generate a new parameter value for searching for a minimum value of an objective function such as an energy function, and inputs the parameter value to the quantum computer.

(P15) The quantum computer uses the new parameter value to execute the operation represented by the variational quantum circuit and the measurement again.

The classical computer and the quantum computer repeat the procedures of (P14) and (P15) to obtain a value of the parameter corresponding to the minimum value of the objective function.

In the procedure of (P14), the classical computer obtains a gradient of the objective function using a difference in objective function, and updates the parameter on the basis of the gradient. In order to obtain the difference in objective function with respect to a change in one parameter, the quantum computer executes the quantum computation and measurement twice.

In a case where the variational quantum circuit includes a plurality of parameters, in order to obtain the gradient of the objective function, a calculation load of an order of the number of parameters is imposed on the quantum computer. It is therefore practically difficult to execute a large-scale VQA that involves updating of a large number of parameters.

The barren plateau reported by J. R. McClean et al., "Barren plateaus in quantum neural network training landscapes", arXiv:1803.11173v1, 2018 is a phenomenon in which a cost function becomes exponentially flat with respect to a size of a problem in a process of optimization. In a barren plateau scenario, a valley accommodating the global minimum of the cost function decreases exponentially with the problem size, forming a so-called narrow valley.

As a result, traversing a topography of the cost function in the process of optimization involves accurately calculating the gradient that exponentially decreases with the problem size, and calculation resources used increase exponentially, such as an increase in the number of measurements. Thus, acceleration of the quantum computation may be impaired.

Furthermore, in a case where the number of stages of the quantum gates included in the quantum circuit increases and the quantum circuit becomes deeper, the deep quantum circuit generates a more complex state, and a quantum state becomes closer to a random state. For this reason, the gradient becomes closer to zero on average, and a barren plateau is likely to occur.

Thus, in the VQA, the calculation time of quantum machine learning becomes longer as the depth of the quantum circuit and the number of parameters increase.

FIG. 3 illustrates a functional configuration example of a training device according to the embodiment. A training device 301 in FIG. 3 includes an acquisition unit 311 and a training unit 312.

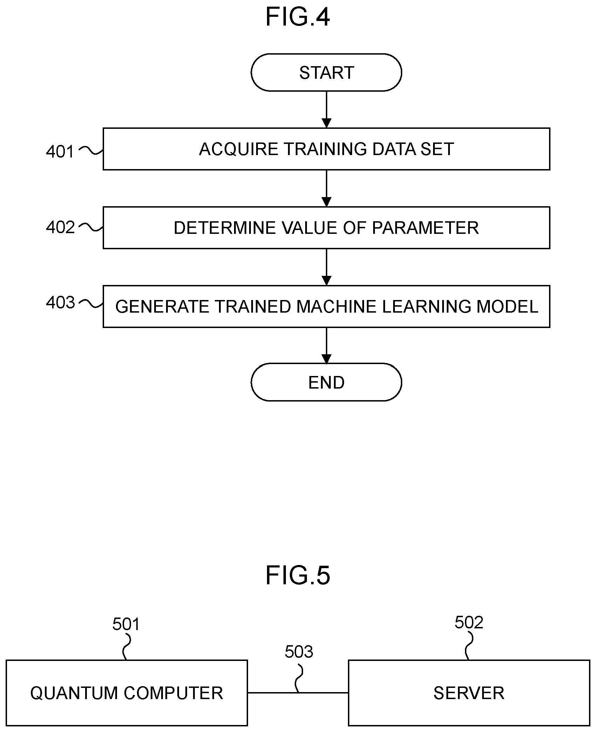

FIG. 4 is a flowchart illustrating an example of first training processing performed by the training device 301 in FIG. 3. First, the acquisition unit 311 acquires a training data set of a machine learning model (Step 401). The machine learning model includes a quantum circuit in each of a plurality of layers and a generating function that generates, from an output of a first quantum circuit in a preceding layer in two consecutive layers, an input of a second quantum circuit in a subsequent layer.

Next, the training unit 312 trains the machine learning model using the quantum computer that executes calculation of the quantum circuit in each of the plurality of layers and the training data set, thereby determining a value of a parameter included in the generating function (Step 402). Then, the training unit 312 generates the trained machine learning model by setting the value of the parameter in the generating function (Step 403).

According to the training device 301 in FIG. 3, efficiency of machine learning using a quantum computer is improved.

FIG. 5 illustrates a configuration example of a quantum computer system including the training device 301 in FIG. 3. The quantum computer system in FIG. 5 includes a quantum computer 501 and a server 502. The quantum computer 501 and the server 502 are hardware. The server 502 is a classical computer. The server 502 corresponds to the training device 301 in FIG. 3.

The server 502 communicates with the quantum computer 501 via a communication line 503. The server 502 stores an inference model to be trained and executes machine learning for training the inference model using the quantum computer 501, thereby generating a trained inference model. The inference model is an example of the machine learning model.

The inference model to be trained includes L layers: Layers 1 to L (L is an integer of 1 or more), an augmentation function A0, and augmentation functions A1 to AL. Each Layer j (j = 1 to L) includes a quantum circuit. As the quantum circuit in each Layer j, for example, a quantum circuit having a structure as illustrated in FIG. 2 is used. In this case, it is preferable to use a relatively shallow quantum circuit in each Layer j.

An augmentation function A0 generates an input of the quantum circuit in Layer 1 from input data of the inference model. The augmentation function Aj (j = 1 to L-1) generates an input of the quantum circuit in Layer j+1 from an output of the quantum circuit in Layer j. The augmentation function AL generates output data of the inference model from an output of the quantum circuit in Layer L-1.

By using a deep structured inference model with a large number of layers L, it is possible to obtain a highly accurate inference result for a problem that is difficult to calculate by the classical computer. For example, in a case of drug discovery or material development, a physical amount such as ground energy of a molecule or a position of an electron is obtained as an inference result. The deep structured inference model can also be applied to other problems such as quantum system simulation.

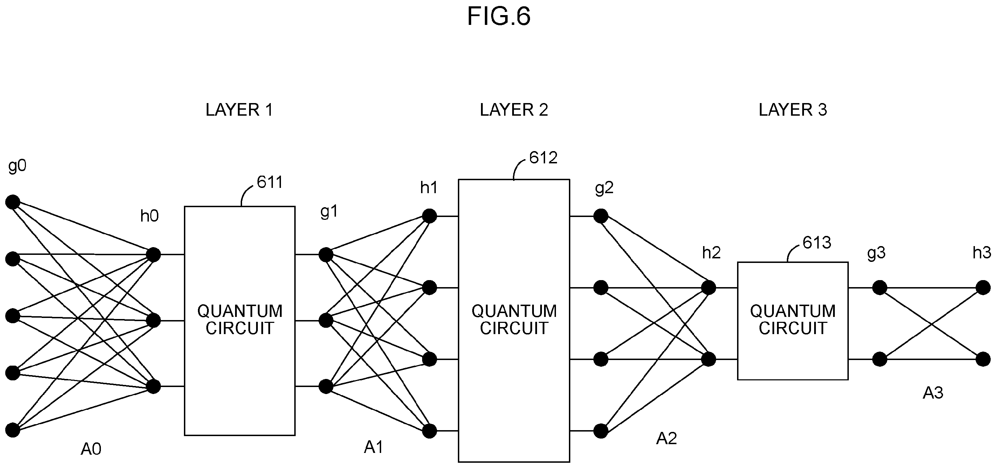

FIG. 6 illustrates an example of an inference model to be trained. The inference model in FIG. 6 includes Layers 1 to 3 and the augmentation functions A0 to A3. In this example, L=3 holds.

Layer 1 includes a quantum circuit 611, Layer 2 includes a quantum circuit 612, and Layer 3 includes a quantum circuit 613. The quantum circuit 611 represents an operation on three quantum bits, the quantum circuit 612 represents an operation on four quantum bits, and the quantum circuit 613 represents an operation on two quantum bits.

Data g0 corresponding to input data of the inference model is a five-dimensional vector. Data h0 and data g1 are three-dimensional vectors. Data h1 and data g2 are four-dimensional vectors. Data h2 and data g3 are two-dimensional vectors. Data h3 is a two-dimensional vector.

The augmentation function A0 generates the data h0 from the data g0. The quantum circuit 611 generates the data g1 from the data h0. The augmentation function A1 generates the data h1 from the data g1.

The quantum circuit 612 generates the data g2 from the data h1. The augmentation function A2 generates the data h2 from the data g2. The quantum circuit 613 generates the data g3 from the data h2. The augmentation function A3 generates the data h3 from the data g3. The data h3 is output as output data of the inference model.

The augmentation function A1 connects the quantum circuit 611 in Layer 1 and the quantum circuit 612 in Layer 2. The augmentation function A2 connects the quantum circuit 612 in Layer 2 and the quantum circuit 613 in Layer 3.

Data gj (j = 1 to L) represents a measurement value generated by the quantum computer 501 executing an operation represented by the quantum circuit in Layer j, and is described by the following formula.

$$gj=fj(h(j-1),\theta j) \qquad\qquad (1)$$

fj(h(j-1),θj) represents a function that generates a measurement value of the quantum circuit in Layer j. The data gj is a d(gj)-dimensional vector, data h(j-1) is a d(h(j-1))-dimensional vector, and a parameter θj is a d(θj)-dimensional vector. d(gj), d(h(j-1)), and d(θj) are integers of 1 or more. d(gj) corresponds to the number of quantum bits operated by using the quantum circuit in Layer j.

The server 502 generates a QFM by embedding the data h(j-1) in the fixed quantum circuit 211 in FIG. 2. Each element of the parameter θj corresponds to a parameter included in the variational quantum circuit 212 in FIG. 2. The variational quantum circuit 212 can change a measurement basis to be used in the measurements 213-1 to 213-N by performing a random single qubit rotation in accordance with the parameter θj.

Data hj (j = 0 to L) is described by the following formula by using the augmentation function Aj.

$$hj=Aj(gj,Wj) \qquad\qquad (2)$$

The data hj is a d(hj)-dimensional vector, the data gj is a d(gj)-dimensional vector, and a weight Wj is a matrix of d(gj)×d(hj). As a augmentation function Aj(gj,Wj), for example, a function as in the following formula is used.

$$Aj(gj,Wj)=gjWj \qquad\qquad (3)$$

$$Aj(gj,Wj)=2\pi\sigma(-gjWj)-\pi v \qquad\qquad (4)$$

$$\sigma(-gjWj)(d)=1/(1+exp(-gjWj(d))) \qquad\qquad (5)$$

Formula (3) represents linear reinforcement. Formula (4) represents a combination of linear reinforcement and non-linear normalization. In Formula (3) and Formula (4), gjWj represents computation of weighting a plurality of values included in the data gj using the weight Wj. σ(-gjWj) in Formula (4) represents a d(hj)-dimensional vector, and v represents a d(hj)-dimensional vector in which all elements are 1.

σ(-gjWj)(d) in Formula (5) represents a d-th (d = 1 to d(hj)) element of σ(-gjWj). exp() represents an exponential function, and -gjWj(d) represents the d-th element of -gjWj.

By connecting the quantum circuit in Layer j and the quantum circuit in Layer j+1 via the augmentation function Aj(gj,Wj) in Formula (3) or Formula (4), it is possible to train the inference model via the weight Wj without updating the parameter included in each quantum circuit.

By using the augmentation function Aj(gj,Wj), it is possible to increase or decrease the number of dimensions of the data gj. For example, the augmentation function A0 in FIG. 6 decreases the number of dimensions of the data g0, and the augmentation function A1 increases the number of dimensions of the data g1. By connecting shallow quantum circuits in a plurality of layers j via the augmentation function Aj(gj,Wj), it is possible to construct a deep structured inference model with high representation power.

Layer j and Layer j+1 (j = 1 to L-1) are an example of two consecutive layers. The quantum circuit in Layer j is an example of the first quantum circuit in the preceding layer, and the quantum circuit in Layer j+1 is an example of the second quantum circuit in the subsequent layer. The augmentation function Aj(gj,Wj) is an example of the generating function that generates, from an output of the first quantum circuit in the preceding layer, an input of the second quantum circuit in the subsequent layer. The weight Wj is an example of the parameter included in the generating function.

In training processing of training the inference model to be trained, the server 502 generates the data h0 by a augmentation function A0(g0,WO) using training data as the data g0, and generates a QFM by embedding information of the data h0 in the fixed quantum circuit 211. Then, the server 502 transmits, to the quantum computer 501, information of the quantum circuit in Layer 1 including the generated QFM.

The quantum computer 501 sets a plurality of quantum bits to an initial state |0>, and then executes an operation represented by the quantum circuit in Layer 1 to obtain a measurement value of each quantum bit. Then, the quantum computer 501 transmits the obtained measurement value of each quantum bit to the server 502.

Next, the server 502 generates the data h1 by a augmentation function A1(g1,W1) using the received measurement values of the plurality of quantum bits as the data g1.

The server 502 evaluates the data h1 generated from each of a plurality of pieces of the training data, and updates a weight W1 of the augmentation function A1(g1,W1) on the basis of a result of the evaluation. The server 502 obtains the optimized weight W1 by repeating such update processing. Then, by using the augmentation function A1(g1,W1) including the optimized weight W1, the server 502 generates the data h1 from the data g1 generated using each piece of the training data.

Next, the server 502 generates a QFM by embedding information of the generated data h1 in the fixed quantum circuit 211. Then, the server 502 transmits, to the quantum computer 501, information of the quantum circuit in Layer 2 including the generated QFM.

The quantum computer 501 obtains a measurement value of the quantum circuit in Layer 2 similarly to the quantum circuit in Layer 1, and transmits the measurement value to the server 502.

Next, the server 502 generates the data h2 by a augmentation function A2(g2,W2) using the received measurement value as the data g2.

The server 502 evaluates the data h2 generated from each of the plurality of pieces of training data, and updates a weight W2 of the augmentation function A2(g2,W2) on the basis of a result of the evaluation. The server 502 obtains the optimized weight W2 by repeating such update processing. Then, the server 502 generates the data h2 from each piece of the data g2 using the augmentation function A2(g2,W2) including the optimized weight W2.

Next, the server 502 optimizes weights W3 to WL by performing, for Layers 3 to L, processing similar to that for Layer 2. Then, the server 502 generates a trained inference model by setting the optimized weight Wj (j = 1 to L) in the augmentation function Aj(gj,Wj).

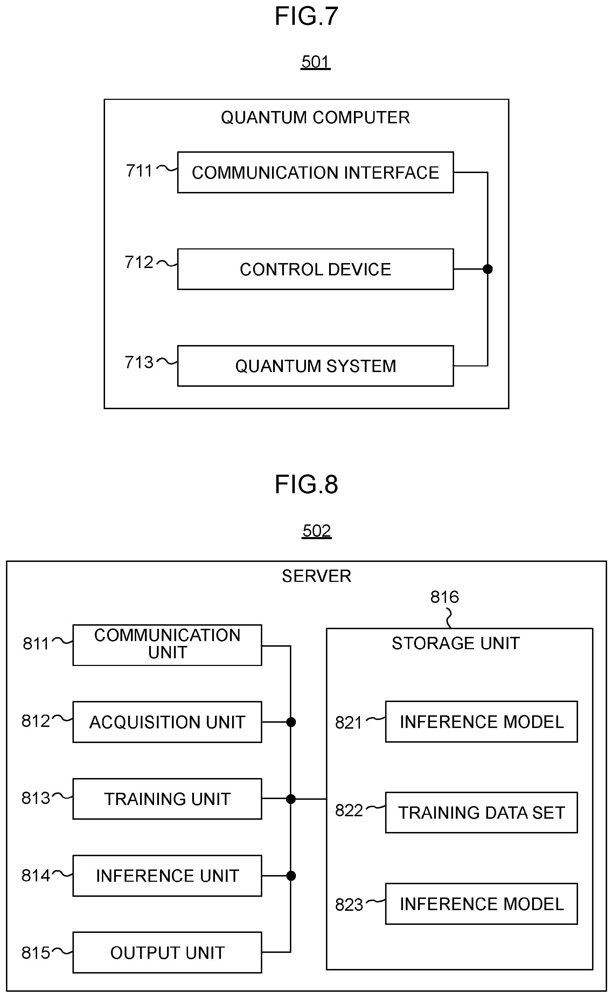

FIG. 7 illustrates a hardware configuration example of the quantum computer 501 in FIG. 5. The quantum computer 501 in FIG. 7 includes a communication interface 711, a control device 712, and a quantum system 713. These components are hardware.

The communication interface 711 is a communication circuit that is connected to the communication line 503 and performs data conversion associated with communication. The quantum system 713 includes a quantum device that implements a plurality of quantum bits.

The communication interface 711 receives information of the quantum circuit from the server 502, and outputs the information to the control device 712. The control device 712 generates a control signal using the information of the quantum circuit, and outputs the control signal to the quantum system 713.

The quantum system 713 obtains a measurement value of each quantum bit by operating the quantum bits in accordance with the control signal. Then, the control device 712 transmits the measurement value of each quantum bit obtained by the quantum system 713 to the server 502 via the communication interface 711.

FIG. 8 illustrates a functional configuration example of the server 502 in FIG. 5. The server 502 in FIG. 8 includes a communication unit 811, an acquisition unit 812, a training unit 813, an inference unit 814, an output unit 815, and a storage unit 816. The acquisition unit 812 and the training unit 813 correspond to the acquisition unit 311 and the training unit 312 in FIG. 3, respectively.

The communication unit 811 communicates with the quantum computer 501 via the communication line 503. The communication unit 811 can also communicate with a database server (not illustrated) or the like via the communication line 503. The storage unit 816 stores an inference model 821 to be trained.

The acquisition unit 812 acquires a training data set 822 including a plurality of pieces of training data from a database server or the like via the communication unit 811, and stores the training data set 822 in the storage unit 816. The acquisition unit 812 may acquire the training data set 822 input from a user via a user interface or a portable recording medium.

The training unit 813 trains the inference model 821 using the training data set 822 while communicating with the quantum computer 501 via the communication unit 811, thereby generating and storing a trained inference model 823 in the storage unit 816.

The training unit 813 trains the inference model 821 by, for example, contrastive learning. In a case where the contrastive learning is adopted, the training unit 813 generates a combination of positive example data xp and negative example data xn from the training data set 822. For example, the positive example data xp is generated by adding a correct label to known data, and the negative example data xn is generated by adding an incorrect label to the same data as the positive example data xp.

The training unit 813 uses a cost function C(hpj,hnj) as in the following formula using noise contrastive estimation as an evaluation function of the contrastive learning of the weight Wj (j = 0 to L).

$$C(hpj,hnj)=\log(1+\exp(D(hpj,hnj)/\tau)) \qquad (6)$$

$$D(hpj,hnj)=sim(hnj,pj)-sim(hpj,pj) \qquad (7)$$

$$sim(a,b)=(a \cdot b)/(n(a)n(b)) \qquad (8)$$

hp0 represents the data h0 generated from the positive example data xp by using the augmentation function A0(g0,WO) when the positive example data xp is input to the inference model 821. hn0 represents the data h0 generated from the negative example data xn by using the augmentation function A0(g0,WO) when the negative example data xn is input to the inference model 821.

hpj (j = 1 to L) represents the data hj generated from the data gj of Layer j by using the augmentation function Aj(gj,Wj) when the positive example data xp is input to the inference model 821. hnj (j = 1 to L) represents the data hj generated from the data gj of Layer j by using the augmentation function Aj(gj,Wj) when the negative example data xn is input to the inference model 821. The data hpj (j = 1 to L-1) is an example of first data, and the data hnj (j = 1 to L-1) is an example of second data.

In Formula (6), $\tau$ is a scale adjustment parameter. In Formula (7), pj represents an anchor vector used to evaluate the data hj. The anchor vector pj is a random vector of d(hj) dimensions. In Formula (7), sim(a,b) represents the degree of similarity between a vector a and a vector b. a·b represents an inner product of the vector a and the vector b, n(a) represents a norm of the vector a, and n(b) represents a norm of the vector b.

In training of the inference model 821, the training unit 813 prevents update of the parameter $\theta$j included in the quantum circuit in each Layer j. This eliminates the need for the quantum computer 501 to execute the quantum computation repeatedly for training of the parameter $\theta$j, and allows for a reduction in the calculation time it takes to train the inference model 821.

The training unit 813 optimizes the weight Wj by obtaining the weight Wj that minimizes the value of the cost function C(hpj,hnj) for each augmentation function Aj(gj,Wj). Minimizing the cost function C(hpj,hnj) minimizes D(hpj,hnj) in Formula (7). A range of values that can be taken by sim(hpj,pj) and sim(hnj,pj) is expressed by the following formula.

$$-1\leq sim(hpj,pj)\leq 1 \qquad (9)$$

$$-1\leq sim(hnj,pj)\leq 1 \qquad (10)$$

Therefore, when the cost function C(hpj,hnj) is minimized, the weight Wj is trained so that sim(hpj,pj) gets closer to 1 as much as possible and sim(hnj,pj) gets closer to -1 as much as possible. As a result, the weight Wj for distinguishing between the data hpj and the data hnj is obtained. A training algorithm of the inference model 821 can be described as follows.

```
For e=1,...,NE
For j=0,1,...,L
Select a learning batch from a training data set
Generate a combination of the positive example data xp and the negative example data xn from the learning batch
Generate data gpj and data gnj
Repeat the followings until the cost function C(hpj,hnj) converges
hpj=Aj(gpj,Wj)
hnj=Aj(gnj,Wj)
Calculate the cost function C(hpj,hnj)
Update the weight Wj by a gradient method
```

e represents an epoch of training, and NE represents the number of epochs NE is an integer of 1 or more. In a case of j=0, gp0=xp and gn0=xn hold. In a case of j = 1 to L, the data gpj and the data gnj are generated as follows.

The training unit 813 generates a QFM by embedding information of data hp(j-1) generated using an optimized weight W(j-1) in the fixed quantum circuit 211. Then, the training unit 813 transmits information of the quantum circuit in Layer j including the generated QFM to the quantum computer 501 via the communication unit 811.

The quantum computer 501 executes an operation represented by the quantum circuit in Layer j on a plurality of quantum bits to obtain a measurement value of each quantum bit, and transmits the measurement value to the server 502. The training unit 813 receives the measurement values of the plurality of quantum bits via the communication unit 811, and sets the received measurement values in the data gpj.

Next, the training unit 813 generates a QFM by embedding information of data hn(j-1) generated using the optimized weight W(j-1) in the fixed quantum circuit 211. Then, the training unit 813 transmits information of the quantum circuit in Layer j including the generated QFM to the quantum computer 501 via the communication unit 811.

The quantum computer 501 executes an operation represented by the quantum circuit in Layer j on a plurality of quantum bits to obtain a measurement value of each quantum bit, and transmits the measurement value to the server 502. The training unit 813 receives the measurement values of the plurality of quantum bits via the communication unit 811, and sets the received measurement values in the data gnj.

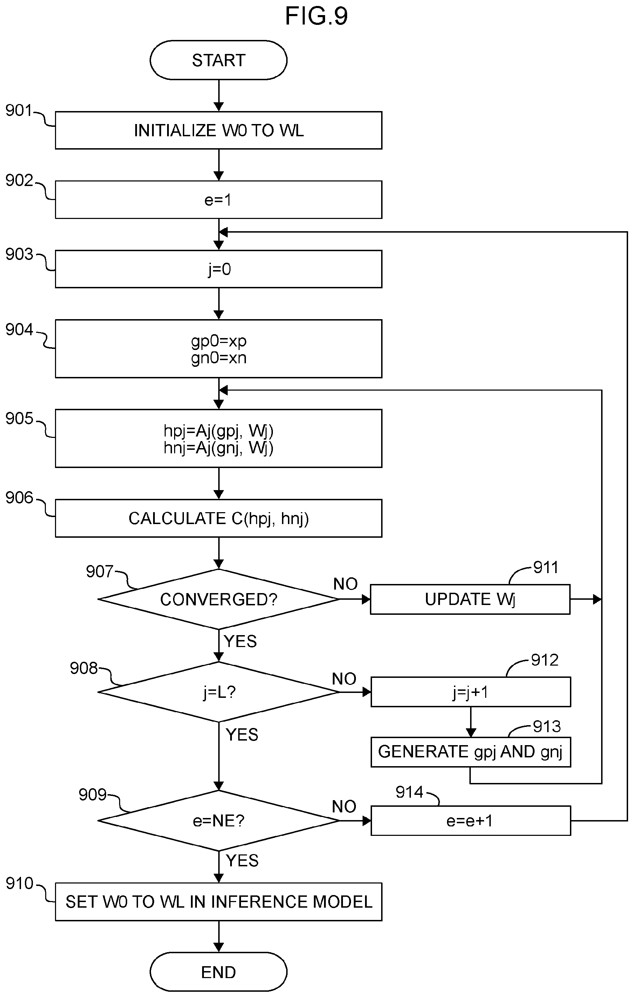

FIG. 9 is a flowchart illustrating an example of second training processing performed by the server 502 in FIG. 8. First, the training unit 813 initializes the weights WO to WL (Step 901), sets 1 as a control variable e (Step 902), and sets 0 as a control variable j (Step 903).

Next, the training unit 813 selects a learning batch from the training data set 822, and generates a combination of the positive example data xp and the negative example data xn from the learning batch. Then, the training unit 813 sets the positive example data xp and the negative example data xn as data gp0 and data gn0, respectively (Step 904).

Next, the training unit 813 generates the data hpj and the data hnj by the following formula (Step 905).

$$hpj=Aj(gpj,Wj) \qquad (11)$$

$$hnj=Aj(gnj,Wj) \qquad (12)$$

Next, the training unit 813 calculates the cost function C(hpj,hnj) using the data hpj and the data hnj (Step 906), and checks whether or not the cost function C(hpj,hnj) has converged (Step 907).

If the weight Wj used to generate the data hpj and the data hnj in Step 905 is an initial value, it is determined that the cost function C(hpj,hnj) has not converged.

If the cost function C(hpj,hnj) has not converged (Step 907, NO), the training unit 813 updates the weight Wj by the gradient method (Step 911), and repeats the processing of Step 905 and the subsequent steps.

In Step 907, if the change in the cost function C(hpj,hnj) associated with the update of the weight Wj is equal to or greater than a threshold value, it is determined that the cost function C(hpj,hnj) has not converged. If the change in the cost function C(hpj,hnj) associated with the update of the weight Wj is smaller than the threshold value, it is determined that the cost function C(hpj,hnj) has converged.

If the cost function C(hpj,hnj) has converged (Step 907, YES), the training unit 813 compares j with L (Step 908). If j is less than L (Step 908, NO), the training unit 813 increments j by 1 (Step 912).

Next, the training unit 813 generates the data gpj and the data gnj using the quantum computer 501 from the data hp(j-1) and the data hn(j-1) generated using the weight W(j-1) (Step 913). Then, the training unit 813 repeats the processing of Step 905 and the subsequent steps.

If j has reached L (Step 908, YES), the training unit 813 compares e with NE (Step 909). If e is less than NE (Step 909, NO), the training unit 813 increments e by 1 (Step 914), and repeats the processing of Step 903 and the subsequent steps.

If e has reached NE (Step 909, YES), the training unit 813 generates the trained inference model 823 by setting the weights WO to WL in the inference model 821 (Step 910).

According to the quantum computer system in FIG. 5, the inference model 821 having a deep structure is constructed by connecting the quantum circuits in the plurality of Layers j by the augmentation function Aj(gj,Wj). By training the weight Wj of each augmentation function Aj(gj,Wj) using the quantum computer 501, it is possible to generate the trained inference model 823 efficiently.

In a case of optimizing not only the weight Wj of each augmentation function Aj(gj,Wj) but also the parameter θj included in the quantum circuit in each Layer j in the training of the inference model 821, the number of calculations for the quantum circuits using the quantum computer 501 is on the order of NE×NP. NP represents the total number of parameters including the weight Wj and the parameter θj.

On the other hand, in a case of preventing optimization of the parameter θj and optimizing the weight Wj by the contrastive learning, the number of calculations for the quantum circuits using the quantum computer 501 does not depend on NP and is on the order of NE×L². Therefore, in a case where NP>>L² holds, the number of calculations can be greatly reduced, and the inference model 821 with a large number of layers L can be easily used.

When the number of calculations for the quantum circuits using the quantum computer 501 is reduced, the quantum computer 501 uses the calculation resources less frequently, and thus the calculation time it takes to train the inference model 821 is reduced. As a result, in various fields such as drug discovery, material development, and quantum system simulation, it is possible to shorten a period until a service using the trained inference model 823 is started.

The inference unit 814 generates an inference result by inferring data s to be inferred using the generated inference model 823, and the output unit 815 outputs a result of the inference. For example, in a case where the inference model 823 is used for classification of the data s, an inference algorithm using the inference model 823 can be described as follows.

```
For k=1,...,K
        x=Combine(s,yk)
        Gk=0
        For j=0,1,...,L
        Generate the data gj
        hj=Aj(gj,Wj)
        Gk+=sim(hj,pj)
        ys=yk0 such that Gk0=maxGk
```

yk (k = 1 to K) represents a k-th classification label among K (K is an integer of 2 or more) classification labels. x=Combine(s,yk) represents processing of adding a classification label yk to the data s to generate data x.

Gk is an index indicating the degree of possibility that the classification result of the data s is the classification label yk. Gk+=sim(hj,pj) represents processing of adding sim(hj,pj) to Gk. In training processing of generating the inference model 823, the anchor vector pj is the same as the anchor vector pj that has been used to evaluate the data hj. Therefore, sim(hj,pj) indicates the degree of possibility that the data x used to generate the data hj is positive example data.

ys represents the classification label of the inference result for the data s, and yk0 represents a k0-th classification label corresponding to a maximum value Gk0 of G1 to GK among classification labels y1 to yK. In a case where the maximum value of G1 to GK is Gk0, the possibility that the classification result of the data s is a classification label yk0 becomes the highest.

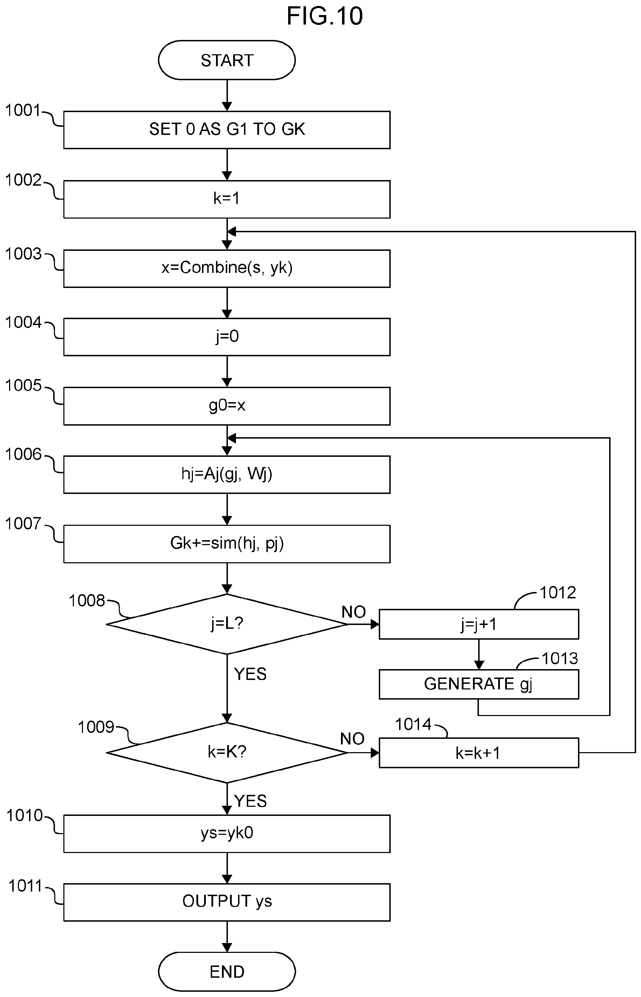

FIG. 10 is a flowchart illustrating an example of inference processing performed by the server 502 in FIG. 8. First, the inference unit 814 sets 0 as G1 to GK (Step 1001), and sets 1 as a control variable k (Step 1002). Then, the inference unit 814 generates the data x by adding the classification label yk to the data s (Step 1003).

Next, the inference unit 814 sets 0 as the control variable j (Step 1004), and sets the data x as the data g0 (Step 1005). Then, the inference unit 814 generates the data hj of the inference model 823 by Formula (2) (Step 1006).

Next, the inference unit 814 updates Gk by calculating sim(hj,pj) and adding it to Gk (Step 1007), and compares j with L (Step 1008). If j is less than L (Step 1008, NO), the inference unit 814 increments j by 1 (Step 1012).

Next, the inference unit 814 generates the data gj of the inference model 823 from the data h(j-1) using the quantum computer 501 (Step 1013). Then, the training unit 813 repeats the processing of Step 1006 and the subsequent steps.

If j has reached L (Step 1008, YES), the inference unit 814 compares k with K (Step 1009). If k is less than K (Step 1009, NO), the inference unit 814 increments k by 1 (Step 1014), and repeats the processing of Step 1003 and the subsequent steps.

If k has reached K (Step 1009, YES), the inference unit 814 sets, as a classification label ys, the k0-th classification label yk0 corresponding to the maximum value Gk0 of G1 to GK among the classification labels y1 to yK (Step 1010). Then, the output unit 815 outputs the classification label ys as an inference result (Step 1011).

In a case where the quantum circuit in FIG. 2 is used as the quantum circuit in each Layer j, the quantum computer 501 measures the states of a plurality of quantum bits by one type of measurement basis. However, X. Gao et al., "Enhancing Generative Models via Quantum Correlations", arXiv:2101.08354v1, 2021 indicates that measurement using different types of measurement basis leads to separation of a quantum generation model and a classical generation model. Therefore, there is a possibility that inference performance of the inference model 823 is improved by performing measurement using different types of measurement basis.

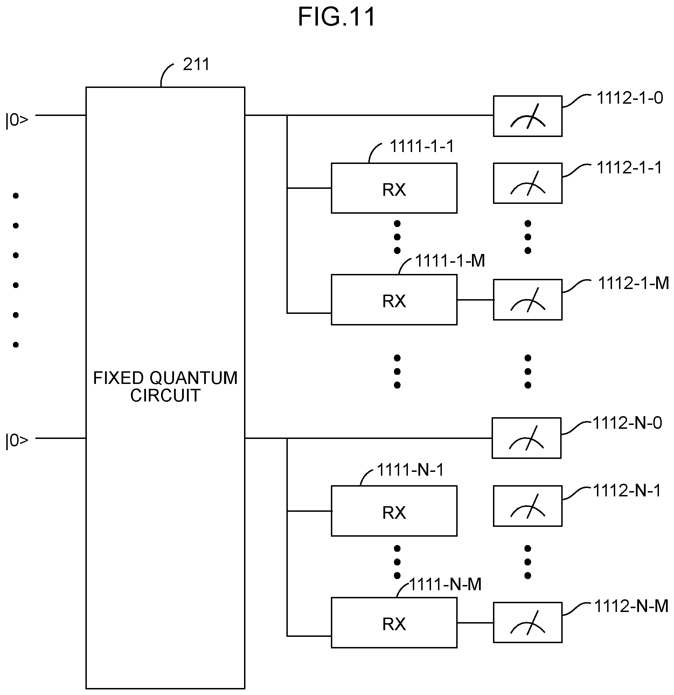

FIG. 11 illustrates an example of a third quantum circuit in which a plurality of types of measurement basis is used for measurement. The quantum circuit in FIG. 11 represents an operation on N quantum bits, and includes the fixed quantum circuit 211 and N×M (M is an integer of 1 or more) RXs 1111-i-m (i = 1 to N, m = 1 to M). The quantum circuit in FIG. 11 is used as the quantum circuit in each Layer j of the inference model 821 and the inference model 823.

The RX 1111-i-m performs a random single qubit rotation in accordance with a parameter θ(i,m). The N×M parameters θ(i,m) correspond to the parameter θj.

The quantum computer 501 measures the state of the quantum bit qi by a computational basis by performing a measurement 1112-i-m (m = 0 to M). By measuring the state after the operation represented by the fixed quantum circuit 211 is executed with the computational basis via the RX 1111-i-m, the measurement basis used in the measurement 1112-i-m (m = 1 to M) is changed to a measurement basis different from that in the measurement 1112-i-0.

N×(M+1) measurement values g(i,m) obtained by the measurements 1112-i-m are used as elements of the data gj. Therefore, d(gj)=N×(M+1) holds. Generating the data gj together with the measurement values measured using the plurality of types of measurement basis allows the inference model 823 to have higher robustness and improved inference performance.

An unknown quantum state can be fully characterized by quantum state tomography. However, this method uses an accurate expected value of an observation amount that exponentially increases with an increase in quantum bits. By using a classical shadow approximation described in H.-Y. Huang et al., "Predicting Many Properties of a Quantum System from Very Few Measurements", arXiv:2002.08953v2, 2020, there is a possibility that such a scaling problem can be avoided. The shadow approximation is an efficient protocol for constructing a classical shadow representation of an unknown quantum state.

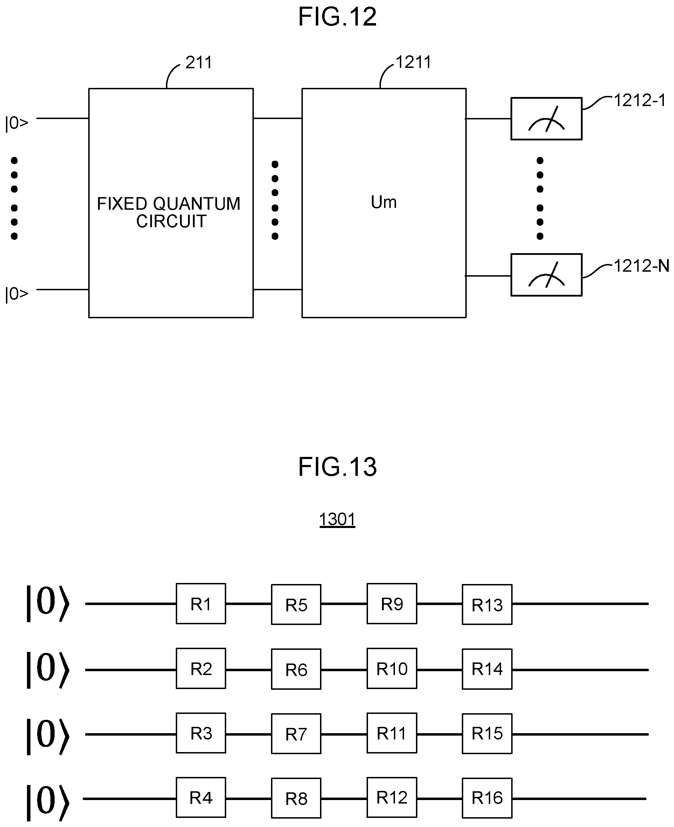

FIG. 12 illustrates an example of a fourth quantum circuit using the shadow approximation. The quantum circuit in FIG. 12 represents an operation on N quantum bits, and includes the fixed quantum circuit 211 and a Um 1211. The quantum circuit in FIG. 12 is used as the quantum circuit in each Layer j of the inference model 821 and the inference model 823.

The Um 1211 includes the parameter θj, and performs a random unitary rotation for the N quantum bits in accordance with the parameter θj. The unitary rotation of the Um 1211 may be an independent single-qubit Clifford rotation. The quantum computer 501 performs measurements 1212-1 to 1212-N to measure the states of the N quantum bits by the computational basis.

The training unit 813 and the inference unit 814 randomly set the parameter θj for each measurement shot m (m = 1 to M) to acquire, from the quantum computer 501, a measurement value b(i,m) of the quantum bit qi (i = 1 to N). In this case, the measurement value b(i,m) varies with each measurement shot m.

The N×M measurement values b(i,m) obtained by M measurements 1212-i are used as elements of the data gj. Therefore, d(gj)=N×M holds. By applying a random unitary rotation for each measurement shot m to a state after execution of the operation represented by the fixed quantum circuit 211, it is possible to generate the data gj with high representation power with a small number of measurements. Thus, the contrastive learning of the inference model 821 having a deep structure can be stably performed.

Next, a specific example of a simulation using the quantum computer system in FIG. 5 will be described with reference to FIGS. 13 to 16. In this simulation, images of 5,000 items of clothing are used as training data, and the inference model 823 that classifies an image of clothing to be classified into any of 10 types of categories is generated. As the images of clothing, grayscale images of 28×28 pixels are used. In this case, each image is represented by a 784-dimensional vector s.

The training unit 813 generates a vector scut having a slightly smaller number of elements than 784 by deleting elements corresponding to a part of a background among the elements of the vector s of the training data. Then, the training unit 813 generates 784-dimensional positive example data xp by adding a correct label to the vector scut, and generates 784-dimensional negative example data xn by adding an incorrect label to the vector scut.

FIG. 13 illustrates an example of a first fixed quantum circuit. The fixed quantum circuit 211 included in the quantum circuit in each Layer j of the inference model 821 is constructed using a fixed quantum circuit 1301 in FIG. 13.

In this example, a dimension d(h(j-1)) of the data h(j-1) embedded in the fixed quantum circuit 211 is a multiple of 16, and the dimension of the vector embedded in the fixed quantum circuit 1301 is 16. Therefore, in order to embed the data h(j-1), d(h(j-1))/16 fixed quantum circuits 1301 are used as the fixed quantum circuits 211.

In Rr (r = 1 to 16), an r-th element among the elements of the 16-dimensional vector embedded in the fixed quantum circuit 1301 is embedded. The operation of Rr (r = 1 to 4, 13 to 16) is described by the following formula using an element h embedded in Rr.

$$RX(h) = \begin{pmatrix} cos\left(\frac{h}{2}\right) & -isin\left(\frac{h}{2}\right) \\ -isin\left(\frac{h}{2}\right) & cos\left(\frac{h}{2}\right) \end{pmatrix} \qquad (13)$$

The operation of Rr (r = 5 to 8) is described by the following formula using the element h embedded in Rr.

$$RY(h) = \begin{pmatrix} cos\left(\frac{h}{2}\right) & -sin\left(\frac{h}{2}\right) \\ sin\left(\frac{h}{2}\right) & cos\left(\frac{h}{2}\right) \end{pmatrix} \qquad (14)$$

The operation of Rr (r = 9 to 12) is described by the following formula using the element h embedded in Rr.

$$RZ(h) = \begin{pmatrix} e^{-i\frac{h}{2}} & 0 \\ 0 & e^{i\frac{h}{2}} \end{pmatrix} \qquad (15)$$

In a case where the operation represented by the fixed quantum circuit 1301 is performed and then the states of four quantum bits are measured by the computational basis, four measurement values g(i) (i = 1 to 4) as in the following formula are obtained.

$$g(1) = Tr[\rho(Z \otimes I \otimes I \otimes I)] \tag{16}$$

$$g(2) = Tr[\rho(I \otimes Z \otimes I \otimes I)] \tag{17}$$

$$g(3) = Tr[\rho(I \otimes I \otimes Z \otimes I)] \tag{18}$$

$$g(4) = Tr[\rho(I \otimes I \otimes I \otimes Z)] \tag{19}$$

$$Z = \begin{pmatrix} 1 & 0 \\ 0 & -1 \end{pmatrix} \tag{20}$$

$$I = \begin{pmatrix} 1 & 0 \\ 0 & 1 \end{pmatrix} \tag{21}$$

In Formulas (16) to (19), $\rho$ is a $16 \times 16$-dimensional density matrix representing an output state in which states of four quantum bits are integrated. Multiplication of Z and I and multiplication of I and I represent Kronecker products, and Tr[] represents a trace of the matrix.

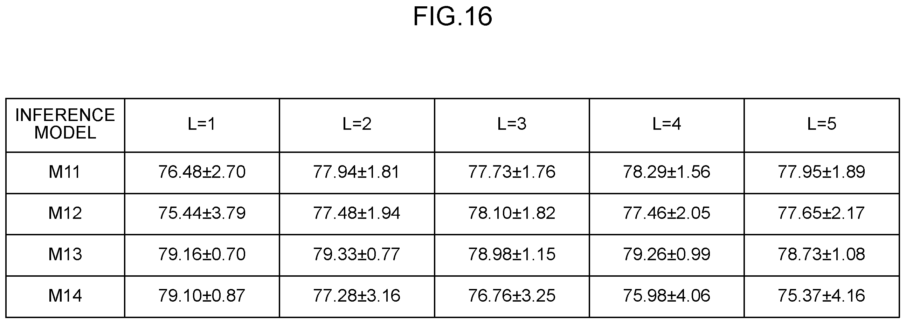

In a case where the operation represented by the fixed quantum circuit 1301 is performed and then the states of the four quantum bits are measured using four types of measurement basis by a measurement method illustrated in FIG. 11, 16 measurement values are obtained.

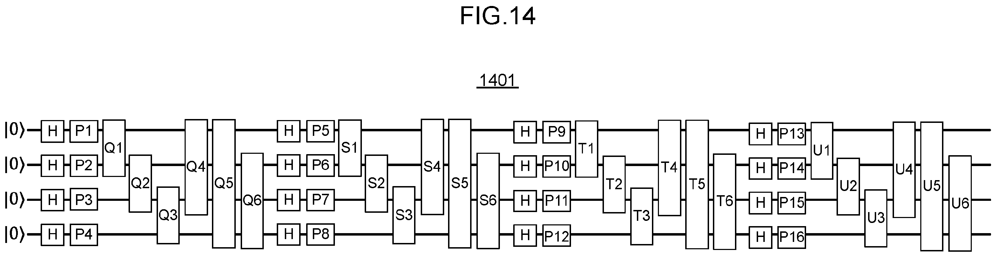

FIG. 14 illustrates an example of a second fixed quantum circuit. The fixed quantum circuit 211 included in the quantum circuit in each Layer j of the inference model 821 is constructed using a fixed quantum circuit 1401 in FIG. 14.

In this example, the dimension d(h(j-1)) of the data h(j-1) embedded in the fixed quantum circuit 211 is a multiple of 16, and the dimension of the vector embedded in the fixed quantum circuit 1401 is 16. Therefore, in order to embed the data h(j-1), d(h(j-1))/16 fixed quantum circuits 1401 are used as the fixed quantum circuits 211.

H represents a Hadamard gate. Pr (r = 1 to 16) is embedded with an r-th element among the elements of the 16-dimensional vector embedded in the fixed quantum circuit 1401. The operation of Pr is described by Formula (15) using the element h embedded in Pr.

Qr (r = 1 to 6) is embedded with a product of any two elements among the elements of the 16-dimensional vector embedded in the fixed quantum circuit 1401. Q1 is embedded with the product of the first and second elements, Q2 is embedded with the product of the second and third elements, and Q3 is embedded with the product of the third and fourth elements. Q4 is embedded with the product of the first and third elements, Q5 is embedded with the product of the first and fourth elements, and Q6 is embedded with the product of the second and fourth elements.

Sr (r = 1 to 6) is also embedded with a product of any two elements among the elements of the 16-dimensional vector embedded in the fixed quantum circuit 1401. S1 is embedded with the product of the fifth and sixth elements, S2 is embedded with the product of the sixth and seventh elements, and S3 is embedded with the product of the seventh and eighth elements. S4 is embedded with the product of the fifth and seventh elements, S5 is embedded with the product of the fifth and eighth elements, and S6 is embedded with the product of the sixth and eighth elements.

Tr (r = 1 to 6) is also embedded with a product of any two elements among the elements of the 16-dimensional vector embedded in the fixed quantum circuit 1401. T1 is embedded with the product of the ninth and tenth elements, T2 is embedded with the product of the tenth and eleventh elements, and T3 is embedded with the product of the eleventh and twelfth elements. T4 is embedded with the product of the ninth and eleventh elements, T5 is embedded with the product of the ninth and twelfth elements, and T6 is embedded with the product of the tenth and twelfth elements.

Ur (r = 1 to 6) is also embedded with a product of any two elements among the elements of the 16-dimensional vector embedded in the fixed quantum circuit 1401. U1 is embedded with the product of the thirteenth and fourteenth elements, U2 is embedded with the product of the fourteenth and fifteenth elements, and U3 is embedded with the product of the fifteenth and sixteenth elements. U4 is embedded with the product of the thirteenth and fifteenth elements, U5 is embedded with the product of the thirteenth and sixteenth elements, and U6 is embedded with the product of the fourteenth and sixteenth elements.

The operation of Qr, Sr, Tr, and Ur is described by the following formula using a product p of two embedded elements.

$$RZZ(p) = \begin{pmatrix} e^{-i\frac{p}{2}} & 0 & 0 & 0 \\ 0 & e^{-i\frac{p}{2}} & 0 & 0 \\ 0 & 0 & e^{-i\frac{p}{2}} & 0 \\ 0 & 0 & 0 & e^{-i\frac{p}{2}} \end{pmatrix} \tag{22}$$

In a case where the operation represented by the fixed quantum circuit 1401 is performed and then the states of four quantum bits are measured by the computational basis, four measurement values are obtained, and in a case where the states of four quantum bits are measured by using four types of measurement basis by the measurement method illustrated in FIG. 11, 16 measurement values are obtained.

In a case where the d(h(j-1))/16 fixed quantum circuits 1301 or fixed quantum circuits 1401 are used as the fixed quantum circuits 211, d(h(j-1))/4 measurement values are obtained by measurement using the computational basis. In addition, d(h(j-1)) measurement values are obtained by measurement using four types of measurement basis.

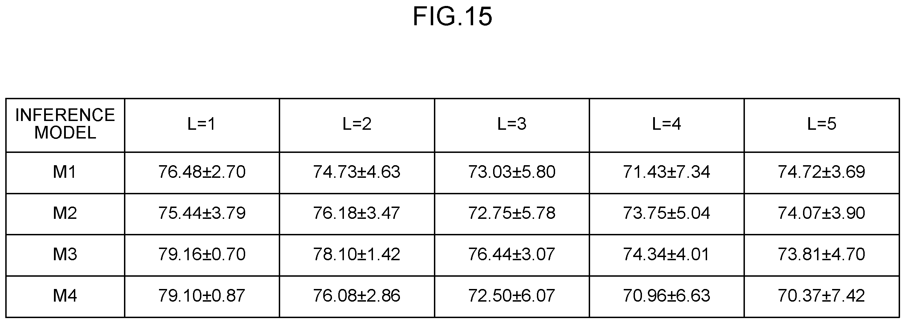

FIG. 15 illustrates an example of a first simulation result. In this example, inference models M1 to M4 are used as the inference model 821 and the inference model 823, and the number of layers used in each of the inference models is L = 1 to 5, in five types.

The inference model M1 includes the augmentation function Aj(gj,Wj) in Formula (3) and the fixed quantum circuit 1301 in FIG. 13. The inference model M2 includes the augmentation function Aj(gj,Wj) in Formula (3) and the fixed quantum circuit 1401 in FIG. 14. Formula (3) represents linear reinforcement.

The inference model M3 includes the augmentation function Aj(gj,Wj) in Formula (4) and the fixed quantum circuit 1301 in FIG. 13. The inference model M4 includes the augmentation function Aj(gj,Wj) in Formula (4) and the fixed quantum circuit 1401 in FIG. 14. Formula (4) represents a combination of linear reinforcement and non-linear normalization. In any of the inference models M1 to M4, measurement is performed by one type of measurement basis.

Each numerical value in FIG. 15 represents the average and standard deviation of an inference accuracy (%) of results of classification by the inference model 823. The inference accuracy is calculated using images of 10,000 items of clothing as test data. For example, the inference accuracy of the inference model M1 with L=1 is 76.48% in average, and the standard deviation is 2.70%.

In a case of L = 1 to 4, the inference accuracy of the inference model M3 is the highest among the inference models M1 to M4. However, in a case of L=5, training of a weight W5 becomes unstable, and the inference accuracy of the inference model M3 is lower than those of the inference model M1 and the inference model M2.

FIG. 16 illustrates an example of a second simulation result. In this example, inference models M11 to M14 are used as the inference model 821 and the inference model 823, and the number of layers used in each of the inference models is L = 1 to 5, in five types.

The inference model M11 includes the augmentation function Aj(gj,Wj) in Formula (3) and the fixed quantum circuit 1301 in FIG. 13. The inference model M12 includes the augmentation function Aj(gj,Wj) in Formula (3) and the fixed quantum circuit 1401 in FIG. 14.

The inference model M13 includes the augmentation function Aj(gj,Wj) in Formula (4) and the fixed quantum circuit 1301 in FIG. 13. The inference model M14 includes the augmentation function Aj(gj,Wj) in Formula (4) and the fixed quantum circuit 1401 in FIG. 14. In any of the inference models M11 to M14, measurement is performed by four types of measurement basis.

Each numerical value in FIG. 16 represents the average and standard deviation of the inference accuracy (%) of results of classification by the inference model 823, as in the case of FIG. 15. In a case where measurement using four types of measurement basis is adopted, training of the weight W5 is stabilized even in a case where L=5 holds. Thus, in all the cases of L = 1 to 5, the inference accuracy of the inference model M13 is the highest among the inference models M11 to M14.

From the simulation results in FIGS. 15 and 16, it can be seen that the inference accuracy of the inference model 823 is improved by adopting measurement using a plurality of types of measurement basis together with a combination of linear reinforcement and non-linear normalization.

The configuration of the training device 301 in FIG. 3 is merely an example, and some of the components may be omitted or changed in accordance with an application or condition of the training device 301.

The configuration of the quantum computer system in FIG. 5 is merely an example, and some of the components may be omitted or changed in accordance with the application or condition of the quantum computer system. The configuration of the quantum computer 501 in FIG. 7 is merely an example, and some of the components may be omitted or changed in accordance with the application or condition of the quantum computer system.

The configuration of the server 502 in FIG. 8 is merely an example, and some of the components may be omitted or changed in accordance with the application or condition of the quantum computer system. For example, in a case where the inference processing is performed by an external device, the inference unit 814 and the output unit 815 can be omitted.

The flowcharts in FIGS. 4, 9, and 10 are merely examples, and a part of the processing may be omitted or changed in accordance with the configuration or condition of the training device 301 or the quantum computer system. For example, in a case where the inference processing is performed by an external device, the inference processing in FIG. 10 can be omitted.

The quantum circuits illustrated in FIGS. 1, 2, 11, and 12 are merely examples, and the structure of the quantum circuit changes in accordance with the application or condition of the inference model 823. The inference model 821 illustrated in FIG. 6 is merely an example, and the structure of the inference model 821 changes in accordance with the application or condition of the inference model 823. The fixed quantum circuits illustrated in FIGS. 13 and 14 are merely examples, and the structure of the fixed quantum circuit changes in accordance with the application or condition of the inference model 823.

The simulation results illustrated in FIGS. 15 and 16 are merely examples, and the simulation results change in accordance with the structure of the inference model 821.

Formulas (1) to (22) are merely examples, and the server 502 may use other formulas to perform the training processing and the inference processing.

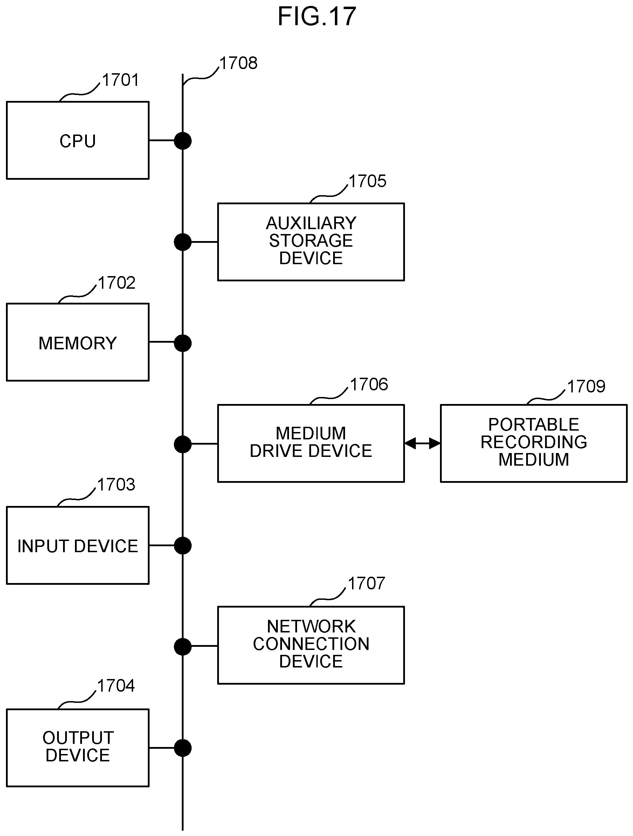

FIG. 17 illustrates a hardware configuration example of an information processing device (computer) used as the training device 301 in FIG. 3 and the server 502 in FIG. 8. The information processing device in FIG. 17 includes a central processing unit (CPU) 1701, a memory 1702, an input device 1703, an output device 1704, an auxiliary storage device 1705, a medium drive device 1706, and a network connection device 1707. These components are hardware, and are connected to each other by a bus 1708.

The memory 1702 is, for example, a semiconductor memory such as a read only memory (ROM) or a random access memory (RAM), and stores programs and data used for processing. The memory 1702 may operate as the storage unit 816 in FIG. 8.

The CPU 1701 (processor) operates as the acquisition unit 311 and the training unit 312 in FIG. 3 by, for example, executing a program using the memory 1702. The CPU 1701 also operates as the acquisition unit 812, the training unit 813, and the inference unit 814 in FIG. 8 by executing a program using the memory 1702.

The input device 1703 is, for example, a keyboard, a pointing device, or the like, and is used for inputting an instruction or information from a user or an operator. The output device 1704 is, for example, a display device, a printer, or the like, and is used for outputting an inquiry or an instruction to the user or the operator, and a processing result. The processing result may be an inference result.

The auxiliary storage device 1705 is, for example, a magnetic disk device, an optical disk device, a magneto-optical disk device, a tape device, or the like. The auxiliary storage device 1705 may be a hard disk drive or a solid state drive (SSD). The information processing device can store programs and data in the auxiliary storage device 1705, and load them into the memory 1702 for use. The auxiliary storage device 1705 may operate as the storage unit 816 in FIG. 8.

The medium drive device 1706 drives a portable recording medium 1709, and accesses recorded contents. The portable recording medium 1709 is a memory device, a flexible disk, an optical disk, a magneto-optical disk, or the like. The portable recording medium 1709 may be a compact disk read only memory (CD-ROM), a digital versatile disk (DVD), a universal serial bus (USB) memory, or the like. The user or the operator can store programs and data in the portable recording medium 1709, and load them into the memory 1702 for use.

As described above, the computer-readable recording medium that stores the programs and data used for processing is a physical (non-transitory) recording medium such as the memory 1702, the auxiliary storage device 1705, or the portable recording medium 1709.

The network connection device 1707 is a communication circuit that is connected to the communication line 503 and performs data conversion associated with communication. The network connection device 1707 may operate as the communication unit 811 in FIG. 8. The information processing device can receive programs and data from an external device via the network connection device 1707, and load them into the memory 1702 for use.

Note that the information processing device does not need to include all the components in FIG. 17, and some of the components can be omitted in accordance with the application or condition of the information processing device. For example, in a case where an interface with the user or the operator is not needed, the input device 1703 and the output device 1704 may be omitted. In a case where the portable recording medium 1709 is not used, the medium drive device 1706 may be omitted.

Although the disclosed embodiment and its advantages have been described in detail, those skilled in the art will be able to make various changes, additions, and omissions without departing from the scope of the invention as clearly set forth in the claims.

According to one aspect, efficiency of machine learning using a quantum computer is improved.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A training program for causing a computer to execute processing comprising:

   acquiring a training data set of a machine learning model including a quantum circuit (611 to 613) in each of a plurality of layers and a generating function (A1, A2) that generates, from an output of a first quantum circuit in a preceding layer in two consecutive layers, an input of a second quantum circuit in a subsequent layer (401);
   determining a value of a parameter included in the generating function by training the machine learning model using a quantum computer (501) that executes calculation of the quantum circuit in each of the plurality of layers and the training data set (402); and
   generating the trained machine learning model by setting the value of the parameter in the generating function (403).

2. The training program according to claim **1,** wherein the generating function includes computation of weighting a plurality of values included in the output of the first quantum circuit by using the parameter as a weight.

3. The training program according to claim 1 or **2,** wherein the processing of determining the value of the parameter includes processing of preventing update of the parameter included in the quantum circuit in each of the plurality of layers.

4. The training program according to any of the preceding claims, wherein

   the quantum computer measures, using each of a plurality of types of measurement basis, states of quantum bits used for calculation of the first quantum circuit to obtain a plurality of measurement values (1112-1-0 to 1112-1-M, 1112-N-0 to 1112-N-M) for the states of the quantum bits, and
   the output of the first quantum circuit includes the plurality of measurement values.

5. The training program according to any of the preceding claims, wherein

   the quantum computer performs a plurality of times of measurement on states of quantum bits used for calculation of the first quantum circuit, and obtains measurement values of the quantum bits after applying a random unitary rotation (1211) to the states of the quantum bits in each of the plurality of times of measurement (1212-1 to 1212-N), and
   the output of the first quantum circuit includes the measurement values of the quantum bits obtained in each of the plurality of times of measurement.

6. The training program according to any of the preceding claims, wherein
   the processing of determining the value of the parameter includes:

   processing of generating positive example data and negative example data from the training data set (904); and
   processing of training the machine learning model by contrastive learning for distinguishing between first data output from the generating function by inputting the positive example data to the machine learning model and second data output from the generating function by inputting the negative example data to the machine learning model (902 to 909, 911 to 914).

7. A training device comprising:

   an acquisition unit (311, 812) that acquires a training data set of a machine learning model including a quantum circuit (611 to 613) in each of a plurality of layers and a generating function (A1, A2) that generates, from an output of a first quantum circuit in a preceding layer in two consecutive layers, an input of a second quantum circuit in a subsequent layer; and
   a training unit (312, 813) that determines a value of a parameter included in the generating function by training the machine learning model using a quantum computer that executes calculation of the quantum circuit in each of the plurality of layers and the training data set, and generates the trained machine learning model by setting the value of the parameter in the generating function.

8. The training device according to claim 7, wherein the generating function includes computation of weighting a plurality of values included in the output of the first quantum circuit by using the parameter as a weight.

9. The training device according to claim 7 or 8, wherein the training unit prevents update of the parameter included in the quantum circuit in each of the plurality of layers.

10. The training device according to claim 7, 8 or 9, wherein

the quantum computer measures, using each of a plurality of types of measurement basis, states of quantum bits used for calculation of the first quantum circuit to obtain a plurality of measurement values (1112-1-0 to 1112-1-M, 1112-N-0 to 1112-N-M) for the states of the quantum bits, and
the output of the first quantum circuit includes the plurality of measurement values.

11. A training method in which a computer executes processing comprising:

acquiring a training data set of a machine learning model including a quantum circuit (611 to 613) in each of a plurality of layers and a generating function (A1, A2) that generates, from an output of a first quantum circuit in a preceding layer in two consecutive layers, an input of a second quantum circuit in a subsequent layer (401);
determining a value of a parameter included in the generating function by training the machine learning model using a quantum computer (501) that executes calculation of the quantum circuit in each of the plurality of layers and the training data set (402); and
generating the trained machine learning model by setting the value of the parameter in the generating function (403).

12. The training method according to claim 11, wherein the generating function includes computation of weighting a plurality of values included in the output of the first quantum circuit by using the parameter as a weight.

13. The training method according to claim 11 or 12, wherein the processing of determining the value of the parameter includes processing of preventing update of the parameter included in the quantum circuit in each of the plurality of layers.

14. The training method according to claim 11, 12 or 13, wherein

the quantum computer measures, using each of a plurality of types of measurement basis, states of quantum bits used for calculation of the first quantum circuit to obtain a plurality of measurement values (1112-1-0 to 1112-1-M, 1112-N-0 to 1112-N-M) for the states of the quantum bits, and
the output of the first quantum circuit includes the plurality of measurement values.

FIG.1

# FIG.2

# FIG.3

301

# FIG.4

```
        ┌──────────────┐
        │    START     │
        └──────────────┘
               │
               ▼
```

401 ∿ | ACQUIRE TRAINING DATA SET

```
               │
               ▼
```

402 ∿ | DETERMINE VALUE OF PARAMETER

```
               │
               ▼
```

403 ∿ | GENERATE TRAINED MACHINE LEARNING MODEL

```
               │
               ▼
        ┌──────────────┐
        │     END      │
        └──────────────┘
```

# FIG.5

501

QUANTUM COMPUTER

503

502

SERVER

# FIG.6

# FIG.7

501

| QUANTUM COMPUTER |
|---|
| 711 — COMMUNICATION INTERFACE |
| 712 — CONTROL DEVICE |
| 713 — QUANTUM SYSTEM |

# FIG.8

502

| SERVER | 816 STORAGE UNIT |
|---|---|
| 811 — COMMUNICATION UNIT | 821 — INFERENCE MODEL |
| 812 — ACQUISITION UNIT | 822 — TRAINING DATA SET |
| 813 — TRAINING UNIT | 823 — INFERENCE MODEL |
| 814 — INFERENCE UNIT | |
| 815 — OUTPUT UNIT | |

## FIG.9

```
                        START

901 ─┐      INITIALIZE W0 TO WL

902 ─┐             e=1

903 ─┐             j=0

904 ─┐           gp0=xp
                 gn0=xn

905 ─┐        hpj=Aj(gpj, Wj)
              hnj=Aj(gnj, Wj)

906 ─┐     CALCULATE C(hpj, hnj)

907 ─┐      CONVERGED?  ──NO──►  911 ─┐  UPDATE Wj

                 YES

908 ─┐         j=L?     ──NO──►  912 ─┐   j=j+1

                 YES                  913 ─┐  GENERATE gpj AND gnj

909 ─┐        e=NE?     ──NO──►  914 ─┐   e=e+1

                 YES

910 ─┐  SET W0 TO WL IN INFERENCE MODEL

                        END
```

# FIG.10

START

1001 — SET 0 AS G1 TO GK

1002 — k=1

1003 — x=Combine(s, yk)

1004 — j=0

1005 — g0=x

1006 — hj=Aj(gj, Wj)

1007 — Gk+=sim(hj, pj)

1008 — j=L?  NO → 1012 — j=j+1 → 1013 — GENERATE gj

YES

1009 — k=K?  NO → 1014 — k=k+1

YES

1010 — ys=yk0

1011 — OUTPUT ys

END

# FIG.11

# FIG.12

211 1211

|0> ⟶ ┌─────────────┐   ┌─────────┐ ⟶ ┌───┐ 1212-1
        │ FIXED QUANTUM │   │   Um    │   │ ∡ │
        │   CIRCUIT     │   │         │
|0> ⟶ └─────────────┘   └─────────┘ ⟶ ┌───┐ 1212-N
                                        │ ∡ │

# FIG.13

1301

$|0\rangle$ ── R1 ── R5 ── R9 ── R13 ──

$|0\rangle$ ── R2 ── R6 ── R10 ── R14 ──

$|0\rangle$ ── R3 ── R7 ── R11 ── R15 ──

$|0\rangle$ ── R4 ── R8 ── R12 ── R16 ──

FIG.14

1401

FIG.15

| INFERENCE MODEL | L=1 | L=2 | L=3 | L=4 | L=5 |
|---|---|---|---|---|---|
| M1 | 76.48±2.70 | 74.73±4.63 | 73.03±5.80 | 71.43±7.34 | 74.72±3.69 |
| M2 | 75.44±3.79 | 76.18±3.47 | 72.75±5.78 | 73.75±5.04 | 74.07±3.90 |
| M3 | 79.16±0.70 | 78.10±1.42 | 76.44±3.07 | 74.34±4.01 | 73.81±4.70 |
| M4 | 79.10±0.87 | 76.08±2.86 | 72.50±6.07 | 70.96±6.63 | 70.37±7.42 |

EP 4 679 336 A1

## FIG.16

| INFERENCE MODEL | L=1 | L=2 | L=3 | L=4 | L=5 |
|---|---|---|---|---|---|
| M11 | 76.48±2.70 | 77.94±1.81 | 77.73±1.76 | 78.29±1.56 | 77.95±1.89 |
| M12 | 75.44±3.79 | 77.48±1.94 | 78.10±1.82 | 77.46±2.05 | 77.65±2.17 |
| M13 | 79.16±0.70 | 79.33±0.77 | 78.98±1.15 | 79.26±0.99 | 78.73±1.08 |
| M14 | 79.10±0.87 | 77.28±3.16 | 76.76±3.25 | 75.98±4.06 | 75.37±4.16 |

# FIG.17

Europäisches
Patentamt
European
Patent Office
Office européen
des brevets

# EUROPEAN SEARCH REPORT

**Application Number**

EP 25 17 8655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARTHUR DAVIS ET AL: "Hybrid Quantum-Classical Neural Networks", 2022 IEEE INTERNATIONAL CONFERENCE ON QUANTUM COMPUTING AND ENGINEERING (QCE), IEEE, 18 September 2022 (2022-09-18), pages 49-55, XP034232038, DOI: 10.1109/QCE53715.2022.00023 [retrieved on 2022-11-22] * page 49 - page 51 * * page 53 - page 54; figures 1-2, 5 * | 1-14 | INV. G06N10/60 G06N10/20 G06N3/082 G06N3/0895 G06N3/045 |
| X | WO 2023/219177 A1 (MITSUBISHI ELECTRIC CORP [JP]) 16 November 2023 (2023-11-16) * paragraph [0027] - paragraph [0043]; figures 5, 6A-B, 8 * | 1-14 | |
| A | XUN GAO ET AL: "Enhancing Generative Models via Quantum Correlations", ARXIV.ORG, CORNELL UNIVERSITY LIBRARY, 201 OLIN LIBRARY CORNELL UNIVERSITY ITHACA, NY 14853, 20 January 2021 (2021-01-20), XP081864273, * the whole document * | 1-14 | TECHNICAL FIELDS SEARCHED (IPC) G06N |
| A | HSIN-YUAN HUANG ET AL: "Predicting Many Properties of a Quantum System from Very Few Measurements", ARXIV.ORG, CORNELL UNIVERSITY LIBRARY, 201 OLIN LIBRARY CORNELL UNIVERSITY ITHACA, NY 14853, 22 April 2020 (2020-04-22), XP081909109, DOI: 10.1038/S41567-020-0932-7 * the whole document * | 1-14 | |

The present search report has been drawn up for all claims

| Place of search | Date of completion of the search | Examiner |
|---|---|---|
| The Hague | 20 October 2025 | Cilia, Elisa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 8655

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2025

| Patent document cited in search report | Publication date | Patent family member(s) | | Publication date |
|---|---|---|---|---|
| WO 2023219177 A1 | 16-11-2023 | EP | 4388459 A1 | 26-06-2024 |
| | | JP | 7745783 B2 | 29-09-2025 |
| | | JP | 2025505468 A | 26-02-2025 |
| | | WO | 2023219177 A1 | 16-11-2023 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022176899 A

**Non-patent literature cited in the description**

- **V. HAVLICEK et al.** Supervised learning with quantum enhanced feature spaces. *arXiv:1804.11326v2*, 2018
- **J. R. MCCLEAN et al.** Barren plateaus in quantum neural network training landscapes. *arXiv:1803.11173v1*, 2018
- **X. GAO et al.** Enhancing Generative Models via Quantum Correlations. *arXiv:2101.08354v1*, 2021
- **H.-Y. HUANG et al.** Predicting Many Properties of a Quantum System from Very Few Measurements. *arXiv:2002.08953v2*, 2020